# EUROPEAN PATENT APPLICATION

(11) **EP 1 689 193 A1**
(43) Date of publication of application: **09.08.2006**
(21) Application number: 06101114.4
(22) Date of filing: 31.01.2006
(51) Int. Cl.: H04N 7/26, G11B 27/00

(54) **Video image encoder, video image decoder, and coded stream generation method**

(30) Priority: 31.01.2005 JP 2005024578
(71) Applicant: KABUSHIKI KAISHA TOSHIBA, Tokyo 105-8001 (JP)
(72) Inventor: Kikuchi, Yoshihiro Toshiba Corporation, Tokyo, 105-8001 (JP)
(74) Representative: Henkel, Feiler & Hänzel

(57) **Abstract**

According to the embodiment, there is provided a coded stream generation method for generating a coded stream including a plurality of first units and a plurality of second units that are arranged in a time series. The method includes: separating the coded stream into a plurality of information units and defining a third unit containing the first units and the second units for each of the information units; assigning a first priority to the initial first unit and to the first units to be decoded as standard data in performing a fast-forward playback mode; assigning a second priority that is lower than the first priority to the first units to be decoded as reference data in performing the fast-forward playback mode; and assigning a third priority that is lower than the second priority to the first units to be undecoded in performing the fast-forward playback mode.

## Description

### CROSS-REFERENCE TO RELATED APPLICATIONS

This application is based upon and claims the benefit of priority from Japanese Patent Application No. 2005-024578, filed on January 31, 2005, the entire contents of which are incorporated herein by reference.

### BACKGROUND

### 1. Field

One embodiment of the invention relates to a video image encoder, a video image decoder, and a coded stream generation method and in particular to an art of devising the management method and placement of a unit containing a parameter set required for decoding image compression data for convenience of handling data when performing decoding processing of image compression data and also covers the structure of a stream. The embodiment devises the data structure convenient for recording data on a record medium, for example, a video disk and also effective for playing back or editing the data from the video disk.

### 2. Description of the Related Art

In recent years, the coding and decoding technology of a video image has been evolving increasingly. This is caused by the fact that high quality of a video image has been advanced and the information amount has been increased and that a wired or wireless network has been developed and the demand for transmitting image information through the network has been increased.

High compression efficiency, high quality at the decoding time, good transmission efficiency, and the like are being demanded. A coding and decoding technology of a video image called H.264/AVC (Advanced Video Coding), unveiled recently and recognized as international standard is available: this technology is disclosed in the following document, for example.
"H.264/AVC TEXTBOOK, OOKUBO Sakae [supervised], KAKUNO Masaya, KIKUCHI Yoshihiro, SUZUKI Teruhiko [joinly edited]", issued on August 11, 2004

H.264/AVC defines a sequence parameter set (SPS) and a picture parameter set (PPS).

The SPS is header information containing information concerning the whole sequence, such as profile, level, and coding mode of the whole sequence. The SPS affects the capability of a decoder.

The profile includes a base line profile, a main profile, a high profile, etc., and the coding tool differs. The level stipulates the transmission speed, the image size, etc., and levels 1 to 5.1 are stipulated. In the whole sequence, the processing capability of a decoder is determined by a combination of the level and the profile. Here, the sequence is a video image, but further units separated according to a given number of frames (for example, 20 to 30 frames) may be set.

The PPS is information concerning the finer unit than the SPS and is header information indicating the coding mode of the whole associated picture (for example, entropy coding mode, initial value of quantization parameter in picture units, etc.,).

When a decoder decodes compression data of a video image, a controller in the decoder references the SPS and the PPS and controls the decode operation of the decoder in response to the parameters. Therefore, to place the parameter set (SPS, PPS) in the stream, the parameter set needs to arrive at the decoder before the compression data referencing the parameter set. This condition is stipulated in H.264/AVC.

In H.264/AVC in the related art, the parameter set (SPS, PPS) placement in the stream is highly flexible as mentioned above. That is, to place the parameter set (SPS, PPS) in the stream, the parameter set needs only to be set so as to arrive at the decoder before the data referencing the parameter set. Thus, an unrelated parameter set, compression data, etc. , may be placed between the parameter set and the data referencing the parameter set.

Consequently, the decoder decodes all of the whole SPSs, PPSs arriving at the decoder according to the rule. This means that the decoder decodes all PPSs and uses the parameter sets contained in the PPSs referenced by the picture units. However, if the PPSs are viewed, the contents of one of the parameter sets contained in the PPSs do not necessarily differ from the contents of another. A large number of parameter sets having the same contents also exist.

Thus, decode processing becomes complicated. According to the above-mentioned rule, a problem would occur if decode processing of compression data is started at a midpoint in the stream or if decode processing of compression data is performed by random access after the stream is once recorded on a record medium. This means that it may become impossible for data which should reference a parameter set to reference any desired parameter set.

To record the stream on an information record medium, such as a hard disk or a DVD, and play back the stream in a special mode, an inconvenience occurs. The above-mentioned parameter set may be unable to be acquired at the random access time. If the parameter set placement is flexible as mentioned above, an inconvenience occurs in a skip playback mode. That is, if PPS or SPS attached to a picture to be decoded with no skip is used to decode a picture to be played back while skipping, the picture may be unable to be played back.

### SUMMARY

According to an embodiment of the invention, there is provided at least one of the followings.

(1) A coded stream generation method for generating a coded stream including a plurality of first units and a plurality of second units that are arranged in a time series, wherein each of the first units containing unit identification information, image compression data, and referenced unit information, and wherein each of the second units containing unit identification information and information that is referenced by the first unit for decoding the image compression data. The method includes: separating the coded stream into a plurality of information units and defining a third unit containing the first units and the second units for each of the information units; assigning, for the first units in the third unit, a first priority to the initial first unit and to the first units to be decoded as standard data in performing a fast-forward playback mode; assigning, for the first units in the third unit, a second priority that is lower than the first priority to the first units to be decoded as reference data in performing the fast-forward playback mode; and assigning, for the first units in the third unit, a third priority that is lower than the second priority to the first units to be undecoded in performing the fast-forward playback mode.

(2) A video image encoder for generating a coded stream including a plurality of first units and a plurality of second units that are arranged in a time series, wherein each of the first units containing unit identification information, image compression data, and referenced unit information, and wherein each of the second units containing unit identification information and information that is referenced by the first unit for decoding the image compression data. The video image encoder includes: a pack setting section that separates the coded stream into a plurality of information units and defines a third unit containing the first units and the second units for each of the information units; and a picture unit management section that performs, when assigning priority as the decoding order to the first units in the third unit: assigning, for the first units in the third unit, a first priority to the initial first unit and to the first units to be decoded as standard data in performing a fast-forward playback mode; assigning, for the first units in the third unit, a second priority that is lower than the first priority to the first units to be decoded as reference data in performing the fast-forward playback mode; and assigning, for the first units in the third unit, a third priority that is lower than the second priority to the first units to be undecoded in performing the fast-forward playback mode.

(3) A video image decoder for receiving and decoding a coded stream including a plurality of first units and a plurality of second units that are arranged in a time series. Each of the first units contains unit identification information, image compression data, and referenced unit information. Each of the second units contains unit identification information and information that is referenced by the first unit for decoding the image compression data. The coded stream is separated into a plurality of information units and defined with a third unit containing the first units and the second units for each of the information units. For the first units in the third unit, a first priority is assigned to the initial first unit and to the first units to be decoded as standard data in performing a fast-forward playback mode. For the first units in the third unit, a second priority that is lower than the first priority is assigned to the first units to be decoded as reference data in performing the fast-forward playback mode. For the first units in the third unit, a third priority that is lower than the second priority is assigned to the first units to be undecoded in performing the fast-forward playback mode. The video image decoder includes: a decoder section that decodes the coded stream; a picture unit management section that detects the first units from the coded stream and feeds the first units into the decoder section; a parameter set analysis section that detects the second units from the coded stream and sets the second units in the decoder section; and a referenced unit number series map generation section that detects a boundary between the third units in the coded stream, detects the first units in the coded stream, generating a series map of referenced unit information of the first units in the third unit, and attaching the priority to the referenced unit information of each of the first units.

According to the configurations of the above, SPS, PPS to be referenced is always attached to the first units assigned the high priority, so that the appropriate parameter set for pictures to be skip-played back is provided and skip playback can be accomplished smoothly.

Therefore, there is provided a video image encoder, a video image decoder, and a coded stream generation method for making it possible to stably provide image playback in executing random access playback or skip playback and also facilitate edit processing by applying a given rule to the placement order of parameter sets if the parameter sets (SPS, PPS) are placed in a stream.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

Fig. 1 is an exemplary diagram to show a basic configuration example of a video image encoder according to an embodiment;

FIG. 2 is an exemplary diagram to show a basic configuration example of a decoder according to the embodiment;

FIG. 3 is an exemplary schematic representation of the stream structure according to the embodiment;

FIG. 4 is an exemplary schematic representation to show the NAL unit types and the description according to the embodiment;

FIG. 5 is an exemplary schematic representation to show the representative types of NAL units according to the embodiment;

FIG. 6 is an exemplary schematic representation to show the priority assigning rule to a picture unit;

FIG. 7 is an exemplary schematic representation to schematically show the priority assigning rule to a picture unit;

FIG. 8 is an exemplary block diagram to show details of a coding control section shown in FIG. 1;

FIG. 9 is an exemplary block diagram to show details of a stream analysis processing section shown in FIG. 2;

FIG. 10 is an exemplary flowchart to show the operation of the encoder shown in FIG. 1;

FIG. 11 is an exemplary flowchart to show the operation of the decoder shown in FIG. 2;

FIG. 12 is an exemplary flowchart to show the fast-forward playback operation of the decoder shown in FIG. 2; and

FIG. 13 is an exemplary schematic representation to show another example of the stream structure according to the embodiment.

### DETAILED DESCRIPTION

Various embodiments according to the invention will be described hereinafter with reference to the accompanying drawings.

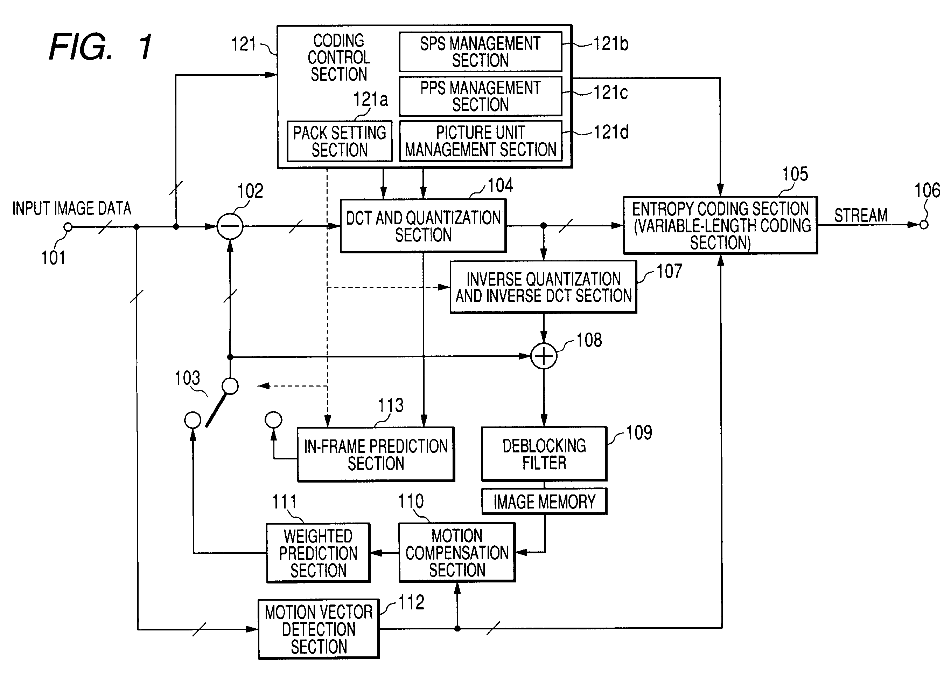

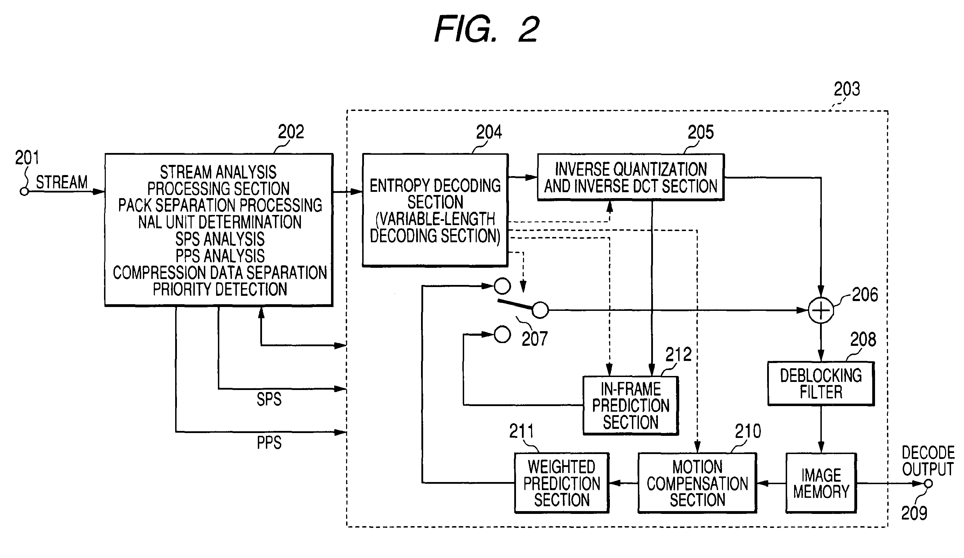

Referring now to the accompanying drawings, there is shown an embodiment. FIG. 1 schematically shows an encoder for coding image data based on H.264/AVC standard. FIG. 2 schematically shows a decoder for decoding image compression data contained in a stream output from the encode in FIG. 1.

In FIG. 1, image data supplied to an input terminal 101 is supplied to a subtracter 102. When interframe processing is performed, the subtracter 102 subtracts image data from a switch 103 from the input image data. The output data of the subtracter 102 is subjected to discrete cosine transform processing and quantization processing in a DCT and quantization section 104. The output of the DCT and quantization section 104 is variable-length coded in an entropy coding section (which may be called a variable-length coding section) 105 and the result is output to an output terminal 106 as a stream.

The output of the DCT and quantization section 104 is also output to an inverse quantization and inverse DCT section 107 and is inversely transformed. An adder 108 adds the provided data by the inverse transformation and image data from the switch 103 together to reproduce a frame image, and outputs the frame image. The output of the adder 108 is input to a deblocking filter 109 to improve block-to-block distortion of image data blocked for the DCT processing and the quantization processing.

The image data output through the deblocking filter 109 is input to image memory. A motion compensation section 110 reads the coded image from the image memory based on an image motion vector from a motion vector detection section 112 and generates data of a predicted image. This means that the motion compensation section 110 generates a predicted image so that the already coded image stored in the image memory becomes close to the image input to the input terminal 101 from motion information. The motion vector detection section 112 uses the input image to the input terminal 101 to detect a motion vector indicating the motion of a video image. The motion vector is also referenced in the data and thus is sent to the entropy coding section 105 as attendant information and is inserted into a header of a predetermined transmission unit.

The motion compensation section 110 outputs the image data to a weighted prediction section 111, which then predicts the image brightness and weights the image data and outputs the data. The image data output from the weighted prediction section 111 is fed into the subtracter 102 through the switch 103.

Since the image data from the weighted prediction section 111 is predicted so as to become close to the input image data as much as possible, the data amount of output from the subtracter 102 lessens efficiently. This means that the compression efficiency is high.

When a scene change is made or in a periodic timing, in-frame compression processing is performed. At this time, an in-frame prediction section 113 performs an in-frame prediction from the already coded image in the period of the block to be coded, and the subtracter 102 subtracts a in-frame prediction signal from the input image to the input terminal 101. The result is introduced into the DCT and quantization section 104. Image compression processing in one frame is executed in the loop made by the DCT and quantization section 104, the in-frame prediction section 113, the switch 103, and the subtracter 102. The image data compressed in the frame (also called I (Intra) slice) is inversely transformed and is decoded in the inverse quantization and inverse DCT section 107. Block-to-block distortion of the decoded data is decreased through the deblocking filter 109 for storage in the image memory. The image data at this time is image compression data using the data only in the frame and becomes reference data to play back a video image of a plurality of frames (picture units).

A coding control section 121 includes a controller. The controller includes a pack setting section 121a, an SPS management section 121b, a PPS management section 121c, a picture unit management section 121d, etc. Further, the PPS management section 121c contains an identification number generation section (which may be called an identification information generation section). The picture unit management section 121d contains a priority setting section. The priority setting is described later in detail.

The coding control section 121 manages input image data and also generates management information required for decoding image compression data (for example, parameter sets SPS and PPS). It also sets the information unit for a stream (GOVU). The coding control section 121 generates and manages management information for the picture (slice) unit (referenced unit number), etc. The GOVU and the management information (for example, parameter sets) are described later in detail.

The decoder shown in FIG. 2 will be discussed. The above-described stream is input to an input terminal 201. This stream is input to a stream analysis processing section 202. The stream analysis processing section 202 performs separation processing responsive to the type of data unit, pack separation processing, and analysis processing of the management information (parameter sets SPS and PPS). It also has a priority detection section for analyzing the priority.

The separated image compression data is input to an entropy decoding section (which may be called a variable-length decoding section) 204 of decoder 203. The entropy decoding section 204 executes decoding processing corresponding to the entropy coding section 105 in FIG. 1.

The image compression data is input to an inverse quantization and inverse DCT section 205 and is decoded. An adder 206 adds the output data of the inverse quantization and inverse DCT section 205 and reference image data from a switch 207 together to reproduce an image. Block distortion of the image data output from the adder 206 is decreased through a deblocking filter 208. The output image data through the deblocking filter 208 is introduced into an output terminal 209 as decode output and is stored in image memory.

A motion compensation section 210 uses sent motion vector information to make a motion correction to the decoded image data stored in the image memory. The correction image data output from the motion compensation section 210 is input to a weighted prediction section 211, which then weights the brightness of the image data. Then, the image data is input to the subtracter 206 through the switch 207. When the image data compressed in the frame (also called I (Intra) slice or also called IDR (Instantaneous Decoding Refresh) picture) comes, a path of the inverse quantization and inverse DCT section 205, a in-frame prediction section 212, the switch 207, the subtracter 206, the deblocking filter 208, and the motion compensation section 210 is constructed. The intraframe image compression data is decoded and one-frame image data is constructed in the image memory. The intraframe coded image data is used as reference image data.

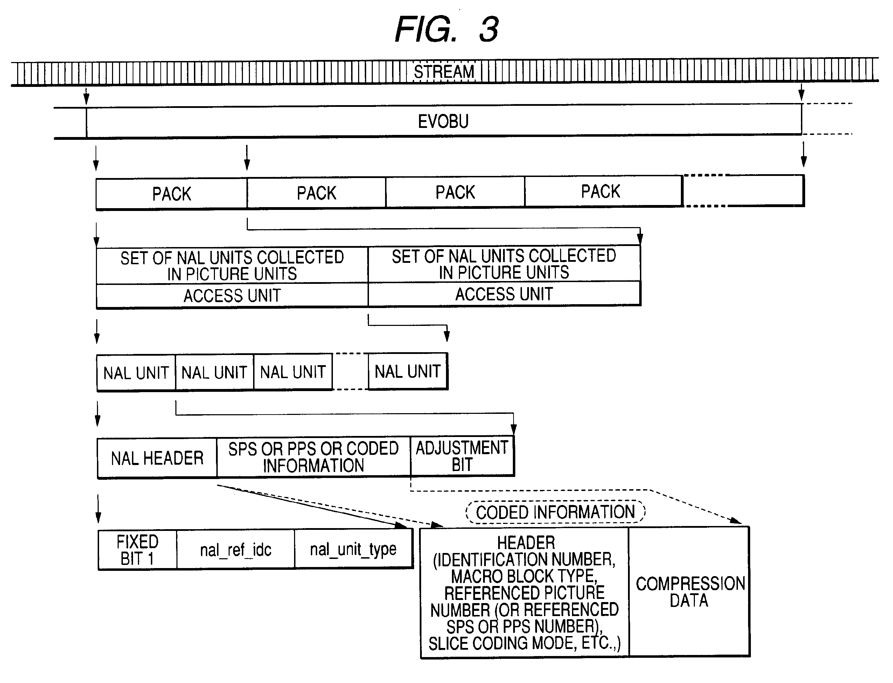

FIG. 3 shows the hierarchical structure of the above-mentioned stream conforming to the H.264/AVC standard and incorporating the invention. The stream is separated in EVOBUs (Extended-Video Object Units) as large units, and one EVOBU contains units of a plurality of packs. The EVOBU is not necessarily required and the stream may be separated directly in units of packs.

When data of a predetermined data part is collected from a plurality of packs, one access unit is contained. One access unit contains a plurality of NAL (Network Abstraction Layer) units. The NAL is a layer between a video coding layer (VCL) and a lower system (layer) for transmitting and storing coded information and is a layer for associating the VCL and the lower system with each other.

The NAL unit is made up of a NAL header and a part of RBSP (Raw Byte Sequence Payload (raw data of compressed video image)) storing information obtained in the VCL. Therefore, different types of NAL units exist. The type of NAL unit can be determined by nal_unit_type in the NAL header. nal_ref_idc is described in the NAL header and is used as identification information of the NAL unit. This means that it indicates whether or not the NAL unit is the NAL unit to be referenced.

SPS, PPS, coded information compression data, and the like exist as the data contents of the RBSP part. Which information piece is contained is indicated by nal_unit_type.

In the invention, nal_ref_idc is used in a unique manner. That is, if the NAL unit is a picture unit, priority information (for example, number) is described in nal_ref_idc. The priority assigning method in nal_ref_idc is described later in detail.

The RBSP part also contains a header. Identification information (for example, number), macro block type, referenced picture information (for example, number), referenced SPS information (for example, number), referenced PPS information (for example, number), slice coding mode information, and the like are described in the header. If the NAL unit is a unit for the parameter set (SPS, PPS), SPS information (for example, number) or PPS information (for example, number), referenced SPS information (for example, number), and the like are described. Parameter information is described in compression data part.

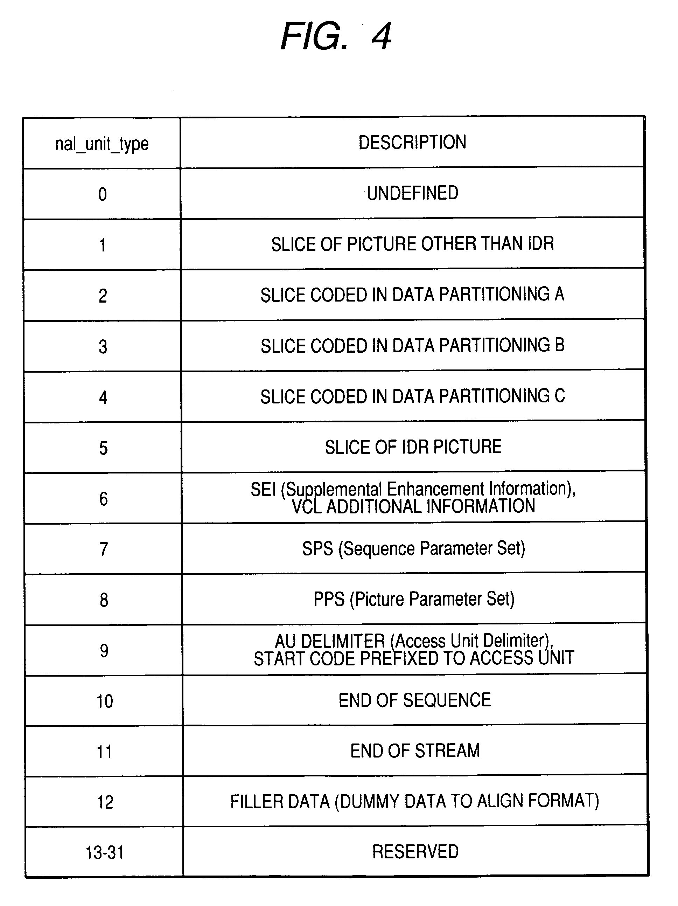

FIG. 4 provides a table listing identifiers indicating the NAL unit types and the description.

The access unit is a collection of NAL units (slices) in picture units. A plurality of NAL units may exist in a plurality of packs or one NAL unit may exist.

One or more VCL, NALs containing coded information compression data exist in the access unit. In addition, SPS, PPS, or any other attendant information may exist. One PPS is always attached to the access unit and the slices making up the access unit may all reference the same PPS.

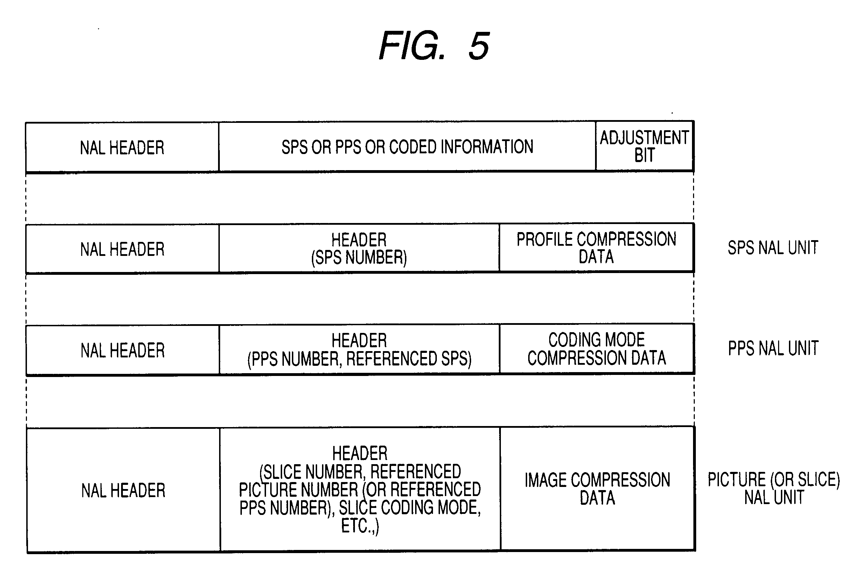

FIG. 5 shows the NAL unit types. The SPS NAL unit has information of profile, etc., in the data part and the header in the data part contains the SPS number of the identification number. The PPS NAL unit has information of coding mode, etc., in the data part and the PPS number of the identification number or the number of the SPS to be referenced (referenced SPS number) is described in the header in the data part. The picture NAL unit has image compression data in the data part and the header in the data part contains the identification number, the referenced picture number indicating the picture to be referenced (or the referenced PPS number to determine the PPS to be referenced), vector information of motion compensation block, the slice number, etc.

The referenced PPS number to determine the PPS to be referenced is described in the VCL, NAL unit as mentioned above. The referenced SPS number to determine the SPS to be referenced is described in the PPS NAL unit.

For assignment of the unit identification number, the following rule is set: The PPS unit identification number as the referenced unit number is described in the header of the image data unit (namely, picture unit). If the unit identification number is not the PPS unit identification number, the identification number of the picture unit (identification number to obtain a predicted image) is described. The SPS unit identification number as the referenced unit number is described in the header of the PPS unit.

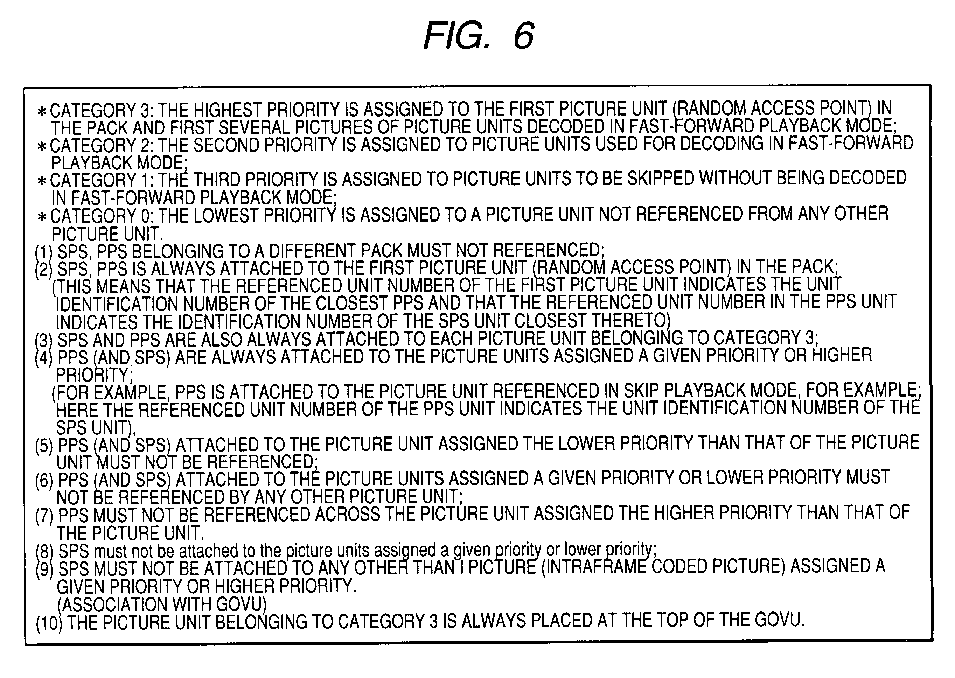

FIG. 6 shows a rule reference table. FIG. 6 shows an example wherein when the random access units to a stream are packs, intrapack priority is assigned to each picture unit and association of the picture unit assigned the priority and the parameter set (SPS, PPS) with each other. Now, assume that the priority becomes lower in the order of category 3 to category 0.

*Category 3: The highest priority (first priority) is assigned to the first picture unit (random access point) in the pack and first several pictures of picture units decoded as reference data in fast-forward playback mode;

*category 2: The second priority is assigned to picture units used for decoding, for example, as referenced data in fast-forward playback mode;

*category 1: The third priority is assigned to picture units to be skipped without being decoded in fast-forward playback mode;

*category 0: The lowest priority is assigned to a picture unit not referenced from any other picture unit.

Next, the association of the picture unit assigned the priority and the parameter set (SPS, PPS) with each other is stipulated as follows:

(1) SPS, PPS belonging to a different pack must not referenced;

(2) SPS, PPS is always attached to the first picture unit (random access point) in the pack (this means that the referenced unit number of the first picture unit indicates the unit identification number of the closest PPS and that the referenced unit number in the PPS unit indicates the identification number of the SPS unit closest thereto);

(3) SPS and PPS are also always attached to each picture unit belonging to category 3 (unit used as reference data);

(4) PPS (and SPS) are always attached to the picture units assigned a given priority or higher priority (for example, PPS is attached to the picture unit referenced in skip playback mode, for example; here the referenced unit number of the PPS unit indicates the unit identification number of the SPS unit) ;

(5) PPS (and SPS) attached to the picture unit assigned the lower priority than that of the picture unit must not be referenced;

(6) PPS (and SPS) attached to the picture units assigned a given priority or lower priority must not be referenced by any other picture unit;

(7) PPS must not be referenced across the picture unit assigned the higher priority than that of the picture unit;

(8) SPS must not be attached to the picture units assigned a given priority or lower priority; and

(9) SPS must not be attached to any other than I picture (intraframe coded picture) assigned a given priority or higher priority.

GOVU of a collection of access units as random access units is defined and the following rule may be defined for the association of the priority assignment to the pictures and the GOVU:

(10) The picture unit belonging to category 3 is always placed at the top of the GOVU.

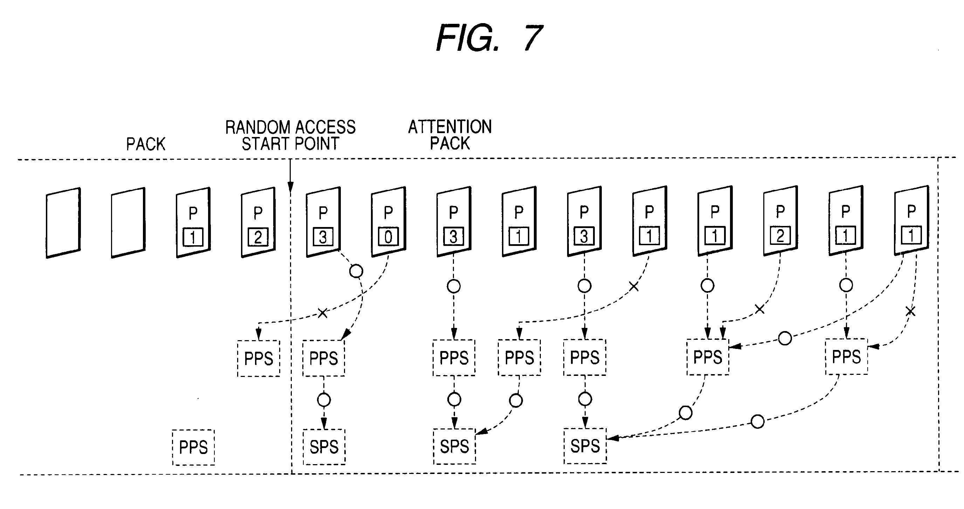

FIG. 7 shows the association of the units on the stream with each other when the rule described above and shown in FIG. 6 is applied.

The stream is separated in predetermined information units, the fourth unit (pack) containing units (P), (PPS), (SPS) in the information unit is defined, and the above-described rule is applied in the unit (pack). FIG. 7 shows a preceding pack and the following pack. P denotes an image compression data unit contained in one access unit. The digit in the unit (P), 3, 2, 1, or 0, denotes the priority.

SPS denotes a sequence parameter set unit, and PPS denotes a picture parameter set unit. The arrow indicated by the dotted line with a circle means that the referenced unit is permitted. The arrow indicated by the dotted line with X means that the referenced unit is inhibited.

The above-described rule would be convenient for executing random access and skip playback. At this time, when the decoder decodes data in pack units, only picture units assigned the high priority (in the example, picture units assigned the first priority "3") are played back. At this time, the parameter set (PPS, SPS) is always added to the picture units assigned the high priority and therefore the decoder can correctly decode the required parameter set. "2" is added to each picture unit assigned the second priority, "1" is added to each picture unit assigned the third priority lower than the second priority, and "0" is added to each picture unit assigned the priority lower than the third priority.

Further, "pack" is defined. Thus, intrapack data with the pack units determined to be record units on a record medium (DVD or hard disk) can be covered. Then, the stream in the DVD format recorded on a record medium is played back and packs are extracted from the stream and the NAL units in each pack are assembled, whereby the stream shown in FIG. 2 or FIG. 7 can be again constructed.

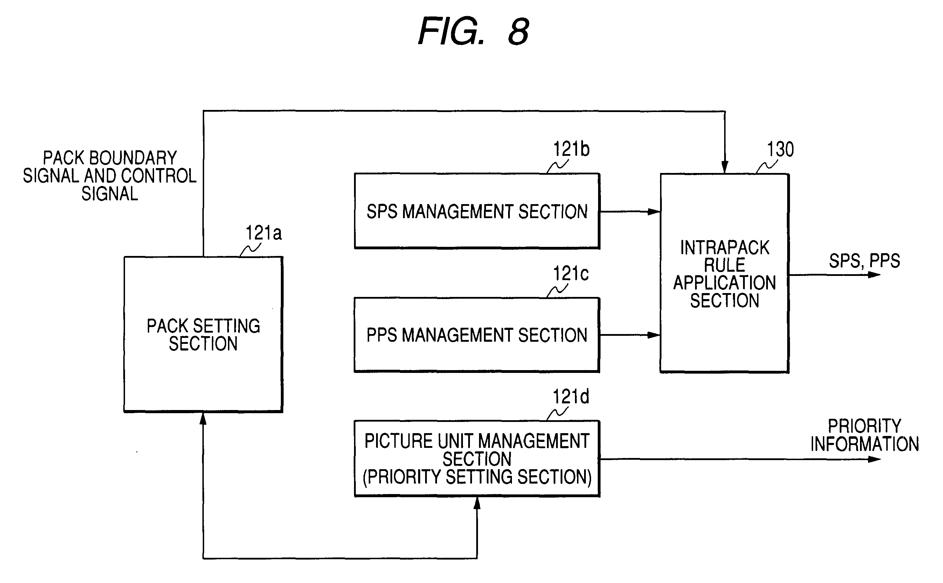

FIG. 8 shows an example of a circuit for managing SPS, PPS, and picture units in the encoder based on the above-described rule. A pack setting section 121a sets each pack (see FIG. 7) based on the playback time or the number of frames of input image data, the estimated data amount of the stream, etc. A pack boundary signal is fed into an intrapack rule application section 130. The intrapack rule application section 130 determines the SPS, PPS to be associated with the picture units, as previously described with reference to FIGS. 6 and 7. The pack boundary signal is also fed into a picture unit management section 121d. The picture unit management section 121d generates priority information based on the rule described above in the attention pack, and gives the generated priority information to the corresponding picture unit.

The pack setting section 121a keeps track of the picture unit assigned the priority information and therefore can determine the SPS, PPS output timing in response to the priority information.

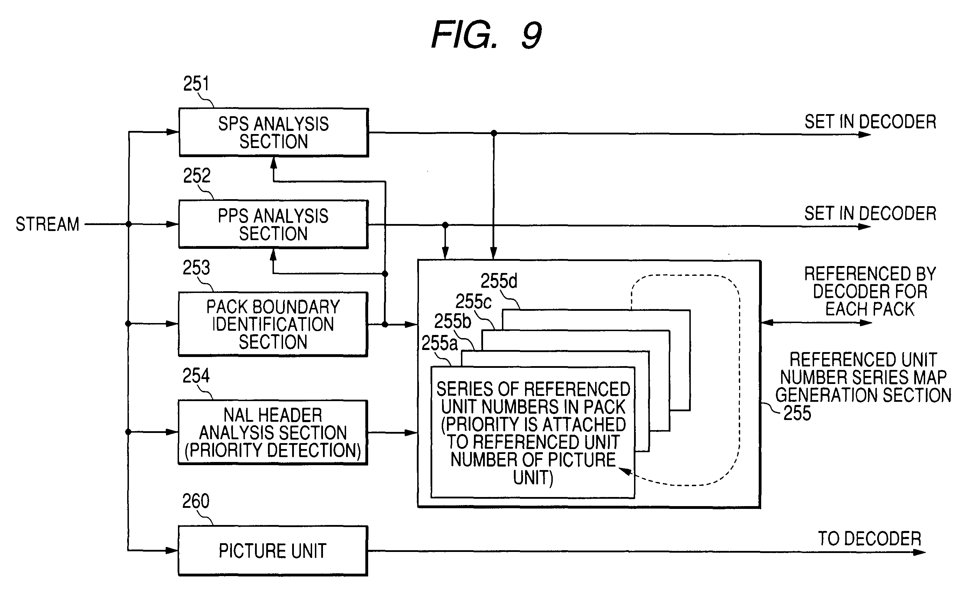

FIG. 9 shows details of the internal configuration of the stream analysis processing section 202 for receiving the stream created based on the rule described above.

The stream is input to an SPS analysis section 251, a PPS analysis section 252, a pack boundary identification section 253, and a NAL header analysis section 254. The parameter set obtained in the SPS analysis section 251, the PPS analysis section 252 is set in a storage section of the decoder together with the identification number of the parameter set.

The pack boundary identification section 253 detects the boundary between packs shown in FIG. 3. Various pack boundary detection modes are possible. For example, information indicating the pack boundary may be provided as attendant information aside from the H.264 coded stream. Alternatively, a dedicated NAL unit indicating the pack boundary may be provided and the NAL unit for boundary identification in the stream may be inserted for transmission. Further, any currently unused number may be used in the NAL type identifier (nal_type_id shown in FIG. 4). For example, if a NAL unit containing nal_type_id=13 comes, it may be determined that the pack boundary is indicated.

The pack boundary signal gives a reset signal to the SPS analysis section 251 and the PPS analysis section 252. It gives the pack boundary signal to a referenced unit number series map generation section 255. The referenced unit number series map generation section 255 receives the priority information and the referenced unit number of picture unit from the NAL header analysis section 254 and generates a series map of the referenced unit numbers in the pack. At this time, the attendant priority information is also added to the referenced unit number. From the series map, the referenced unit number and the priority information as shown in FIG. 7 are confirmed. As many series maps as the number of the packs are generated. The series maps are circulated in order and a series map for a new pack is constructed and the series map for an old pack is discarded.

When the picture unit of the attention pack is decoded in the decoder, the referenced unit number series map in the referenced unit number series map generation section 255 is referenced.

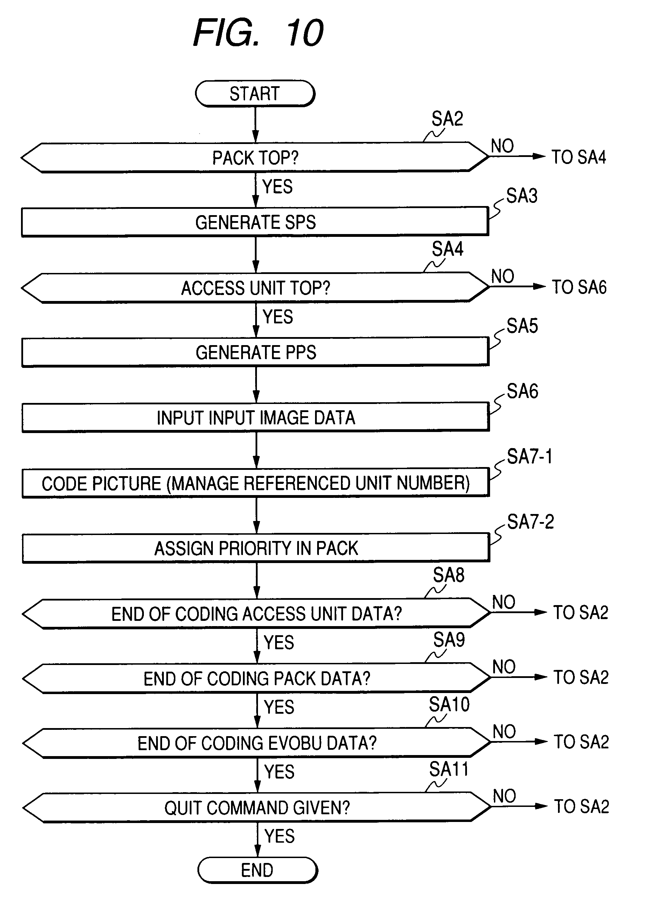

FIG. 10 is a flowchart for implementing the above-described signal processing. At the start time of coding input image data, whether or not the current point is the pack top is determined (block SA2). For example, the data estimation amount, the number of frames at the coding time, and the like are set at the pack top. If the current point is the pack top, SPS is generated (block SA3) and whether or not the current point is the access unit top (block SA4) . Whether or not the current point is the access unit top is determined by whether or not it is the picture (frame) top. If the current point is the access unit top, PSP is generated (block SA5) and input image data is input to the encoder section (block SA6) . Next, actual picture coding is performed (block SA7-1). At block SA7-1, the referenced unit number is also referenced to determine the parameter set and the reference picture at the decoding time, etc. Further, priority information in the pack is also added to the picture unit (block SA7-2).

Next, if coding of the access unit data does not terminate at block SA8, the process returns to block SA2; if coding of the access unit data terminates, whether or not coding of the pack data terminates is determined (block SA9). If coding of the pack data does not terminate, the process returns to block SA2; if coding of the pack data terminates, whether or not coding of the EVOBU data terminates is determined (block SA10). If coding of the EVOBU data does not terminate, the process returns to block SA2; if coding of the EVOBU data terminates, whether or not a quit command is given is determined (block SA11). If a quit command is not given, the process returns to block SA1; if a quit command is given, the encode operation is terminated.

The unit containing the generated image compression data, the unit containing SPS, and the unit containing PPS are output to the output terminal 106 as the stream.

When the data processing is executed according to the flowchart of FIG. 10, the rule previously described with reference to FIGS. 6 and 7 is applied, and the means for implementing the rule is included in the encoder. The controller as the basis for implementing the rule is the coding control section 121 previously described.

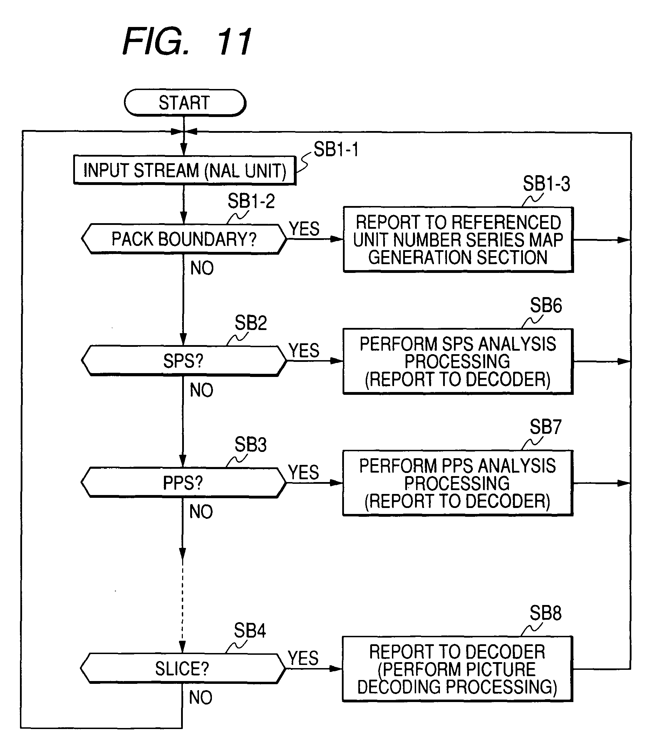

FIG. 11 is a flowchart to show the operation of the stream analysis processing section 202 of the decoder (FIG. 2) for receiving the stream and decoding the stream. When the stream is input, the NAL unit and its NAL header are processed. Since nal_type_id is described in the NAL header as shown in FIG. 3, the type of picture NAL unit containing image compression data, SPS NAL unit, or PPS NAL unit (FIG. 5) can be determined. If a pack boundary NAL unit exists, it can also be identified (block SB1-1).

If attendant information indicating the pack boundary is identified at block SB1-1 and the pack boundary is recognized at block SB1-2, a pack boundary signal is sent to the referenced unit number series map generation section 255 previously described and its related parts for indicating the pack boundary.

If it is determined at block SB1-2 that no pack boundary is recognized, the process goes to block SB2. At block SB2, whether or not the unit is an SPS NAL unit is determined. If the unit is not an SPS NAL unit, the process goes to block SB3 and whether or not the unit is a PPS NAL unit is determined. If the unit is not a PPS NAL unit, the process goes to block SB4 and whether or not the unit is a picture NAL unit is determined. The reason why "SLICE?" is described at block SB4 in the flowchart is that the term "slice" is used as the image compression unit in the H.264/AVC standard.

If an SPS NAL unit is detected at block SB2, SPS analysis processing is performed and the result is reported to the decoder (block SB6). If a PPS NAL unit is detected at block SB3, PPS analysis processing is performed and the result is reported to the decoder (block SB7). Accordingly, the coding mode is set based on SPS, PPS in the decoder. Next, if a picture NAL unit is detected at block SB4, the decoder 203 decodes the image compression data in the data part (block SB8).

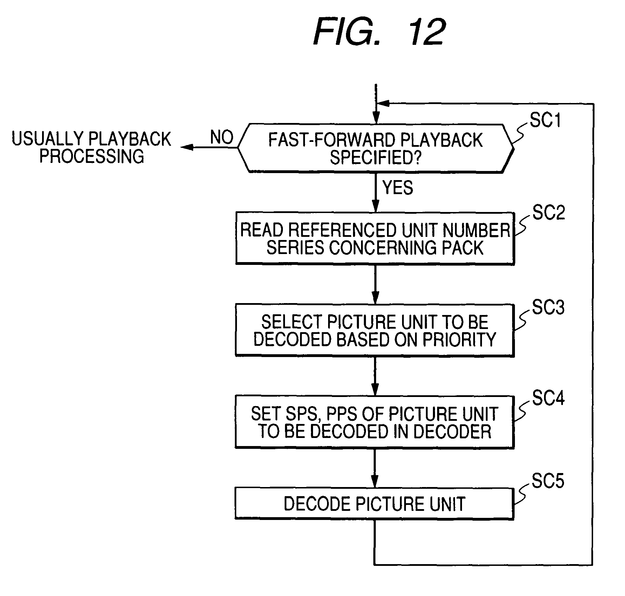

FIG. 12 is a flowchart to show the decode operation when fast-forward playback is specified in the decoder. If it is determined that fast-forward playback is specified (block SC1), the referenced unit number series map concerning the attention pack is read (block SC2). The series map is constructed in the referenced unit number series map generation section 255 as previously described. Next, the picture unit to be decoded is selected based on the priority and is stored in buffer memory (block SC3). SPS, PPS given to the picture unit to be decoded is set in the decoder (block SC4). Decoding processing is executed using the selected picture unit (with the high priority) stored in the buffer memory (block SC5). Accordingly, skip playback is accomplished.

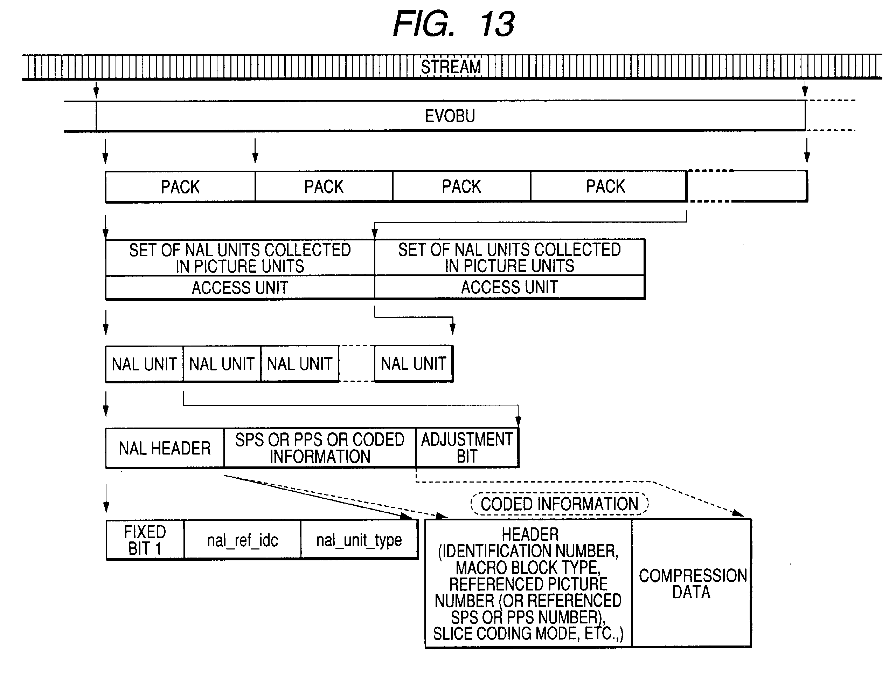

The invention is not limited to the specific embodiment described above. In the description given with reference to FIG. 3, the access units are contained in one pack, but the invention is not limited to the mode. For example, as shown in FIG. 13, if a pack is defined as a smaller unit, a plurality of NAL units may be constructed as a set of data concerning picture from a plurality of packs. A set of NAL units may construct an access unit. In this case, steps SA8 and SA9 are only replaced in the processing in FIG. 10. In this case, the priority as the decoding order is assigned to a plurality of picture units (first units) in a plurality of preset packs as compared with the embodiment wherein the priority as the decoding order is assigned to a plurality of picture units (first units) in a pack (third unit).

It is to be understood that the invention is not limited to the specific embodiment described above and that the invention can be embodied with the components modified without departing from the spirit and scope of the invention. The invention can be embodied in various forms according to appropriate combinations of the components disclosed in the embodiment described above. For example, some components may be deleted from all components shown in the embodiment. Further, the components in different embodiments may be used appropriately in combination.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A coded stream generation method for generating a coded stream including a plurality of first units and a plurality of second units that are arranged in a time series, wherein each of the first units containing unit identification information, image compression data, and referenced unit information, and wherein each of the second units containing unit identification information and information that is referenced by the first unit for decoding the image compression data, the method comprising:
separating the coded stream into a plurality of information units and defining a third unit containing the first units and the second units for each of the information units;
assigning, for the first units in the third unit, a first priority to the initial first unit and to the first units to be decoded as standard data in performing a fast-forward playback mode;
assigning, for the first units in the third unit, a second priority that is lower than the first priority to the first units to be decoded as reference data in performing the fast-forward playback mode; and
assigning, for the first units in the third unit, a third priority that is lower than the second priority to the first units to be undecoded in performing the fast-forward playback mode.

2. The coded stream generation method according to claim 1, wherein information indicating the first through the third priorities are contained in a header of each of the first units.

3. The coded stream generation method according to claim 1, wherein, in the third unit, the second units that are unique with one another are associated with each of the initial first unit and the first units to be decoded as reference data in the fast-forward playback mode.

4. The coded stream generation method according to claim 3, wherein a part of the second units are associated with the first units to which the second priority is assigned.

5. A video image encoder for generating a coded stream including a plurality of first units and a plurality of second units that are arranged in a time series, wherein each of the first units containing unit identification information, image compression data, and referenced unit information, and wherein each of the second units containing unit identification information and information that is referenced by the first unit for decoding the image compression data, the video image encoder comprising:
a pack setting section that separates the coded stream into a plurality of information units and defines a third unit containing the first units and the second units for each of the information units; and
a picture unit management section that performs, when assigning priority as the decoding order to the first units in the third unit:
assigning, for the first units in the third unit, a first priority to the initial first unit and to the first units to be decoded as standard data in performing a fast-forward playback mode;
assigning, for the first units in the third unit, a second priority that is lower than the first priority to the first units to be decoded as reference data in performing the fast-forward playback mode; and
assigning, for the first units in the third unit, a third priority that is lower than the second priority to the first units to be undecoded in performing the fast-forward playback mode.

6. The video image encoder according to claim 5, wherein the picture unit management section contains information indicating the first through the third priorities in a header of each of the first units

7. The video image encoder according to claim 5, further comprising a second unit management section that associates, in the third unit, the second units that are unique with one another with each of the initial first unit and the first units to be decoded as reference data in the fast-forward playback mode.

8. The video image encoder according to claim 7, wherein the second unit management section associates a part of the second units with the first units to which the second priority is assigned.

9. A video image decoder for receiving and decoding a coded stream including a plurality of first units and a plurality of second units that are arranged in a time series,
wherein each of the first units containing unit identification information, image compression data, and referenced unit information,
wherein each of the second units containing unit identification information and information that is referenced by the first unit for decoding the image compression data,
wherein the coded stream is separated into a plurality of information units and defined with a third unit containing the first units and the second units for each of the information units,
wherein, for the first units in the third unit, a first priority is assigned to the initial first unit and to the first units to be decoded as standard data in performing a fast-forward playback mode,
wherein, for the first units in the third unit, a second priority that is lower than the first priority is assigned to the first units to be decoded as reference data in performing the fast-forward playback mode,
wherein, for the first units in the third unit, a third priority that is lower than the second priority is assigned to the first units to be undecoded in performing the fast-forward playback mode,
wherein the video image decoder comprises:
a decoder section that decodes the coded stream;
a picture unit management section that detects the first units from the coded stream and feeds the first units into the decoder section;
a parameter set analysis section that detects the second units from the coded stream and sets the second units in the decoder section; and
a referenced unit number series map generation section that detects a boundary between the third units in the coded stream, detects the first units in the coded stream, generating a series map of referenced unit information of the first units in the third unit, and attaching the priority to the referenced unit information of each of the first units.

10. The video image decoder according to claim 9, wherein the decoder section, when a fast-forward playback command is input, references the referenced unit number series map and decodes pictures only contained in the first units assigned with the first priority and the first units assigned with the second priority.
